# EUROPÄISCHE PATENTSCHRIFT

(11) **EP 2 878 198 B1**
(45) Veröffentlichungstag und Bekanntmachung des Hinweises auf die Patenterteilung: **14.09.2016**
(21) Anmeldenummer: 13195003.2
(22) Anmeldetag: 29.11.2013
(51) Int. Cl.: A01N 43/16, A01N 31/02, A01N 31/16, A01N 35/02, A01N 49/00, A01P 19/00

(54) **Verfahren zum Anlocken von kambiophagen, xylophagen und/oder myzetophagen Insekten**
Method for attraction of cambiophagous, xylophagous and/or myzetophagous insects
Procédé destiné à attirer des insectes cambiophages, xylophages et/ou mycétophages

(43) Veröffentlichungstag der Anmeldung: 03.06.2015
(73) Patentinhaber: Flügel GmbH, 37520 Osterode am Harz (DE)
(72) Erfinder: Holighaus, Gerrit, Dr., 37075 Göttingen (DE)
(74) Vertreter: Michalski Hüttermann & Partner Patentanwälte mbB

(56) Entgegenhaltungen:
- EP-B1- 1 853 689
- DE-A1- 1 909 983
- Gerrit Holighaus: "Odour signals relevant to beetles in deadwood habitats", Dissertation, 26. September 2012 (2012-09-26), Seiten 1-184, XP055107569, Göttingen, Germany Gefunden im Internet: URL:http://ediss.uni-goettingen.de/bitstre am/handle/11858/00-1735-0000-000D-F05D-C/h olighaus.pdf?sequence=1 [gefunden am 2014-03-13]
- THORSELL W ET AL: "Efficacy of plant extracts and oils as mosquito repellents", PHYTOMEDICINE, GUSTAV FISCHER VERLAG, STUTTGART, DE, Bd. 5, Nr. 4, 1. Januar 1998 (1998-01-01), Seiten 311-323, XP009106185, ISSN: 0944-7113
- Hartmut Redlich ET AL: "Darstellung von (S)-2,5-Dimethyl-2-isopropyl-2,3-dihydrofu ran, einem der beiden Enantiomeren des Sexuallockstoffs des Werftkäfers Hylecoetus Dermestoides L.", Tetrahedron Letters, 1. Dezember 1981 (1981-12-01), Seiten 5043-5046, XP055107899, Gefunden im Internet: URL:http://ac.els-cdn.com/S004040390192414 1/1-s2.0-S0040403901924141-main.pdf?_tid=4 e48cec0-ab67-11e3-971d-00000aacb360&acdnat =1394794773_822fa73f198cc5e284538676755c12 b4 [gefunden am 2014-03-14]
- J G Brattli ET AL: "Primary attraction and host tree selection in deciduous and conifer living Coleoptera: Scolytidae, Curculionidae, Cerambycidae and LymexyIidae", J. Appl. Ent., 1. Oktober 1998 (1998-10-01), Seiten 345-352, XP055107789, Gefunden im Internet: URL:http://onlinelibrary.wiley.com/store/1 0.1111/j.1439-0418.1998.tb01511.x/asset/j. 1439-0418.1998.tb01511.x.pdf?v=1&t=hsr4hsd f&s=715007a7915e3507065319816e354b847c2426 2b [gefunden am 2014-03-14]
- MCKIBBEN G H, HEDIN P A, MCLAUGHLIN R E, DAVICH T B: "Development of the Bait Principle for Control of Boll Weevils: Addition of Terpenoids and Related Plant Constituents", JOURNAL OF ECONOMIC ENTOMOLOGY, Bd. 64, Nr. 6, 1. Dezember 1971 (1971-12-01), Seiten 1493-1495, XP009176937, U.S.A.
- Louis M Schoonhoven ET AL: "Appendic C.3: Sensory physiology" In: "Insect-Plant Biology", 1 January 2005 (2005-01-01), Oxford University Press, Oxford, U.K., XP055253458, ISBN: 978-0-19-852594-3 page 378,

## Beschreibung

Die vorliegende Erfindung betrifft ein Verfahren zum Anlocken von kambiophagen, xylophagen und/oder myzetophagen Insekten, umfassend die Schritte:
- zumindest teilweises Freisetzen zumindest eines Teils einer Lockstoffzusammensetzung aus einem Behälter, wodurch die Insekten zum Ort der Freisetzung angelockt werden;
- Fangen der angelockten Insekten;
wobei die Lockstoffzusammensetzung Rosenoxid umfasst. Sie betrifft weiterhin die Verwendung einer solchen Lockstoffzusammensetzung und spezielle Lockstoffzusammensetzungen als solche.

Holz ist einer der wichtigsten, vielfältigsten und verbreitetsten Baustoffe weltweit. Die positiven Eigenschaften bestimmenden Haupt-Strukturkomponenten sind Cellulosen und Lignine, die als organisches Material auch in abgeleiteten Produkten jedoch durch viele Organismen als Nahrung genutzt und somit abgebaut werden.

Hier sind neben Pilzen / Hefen hauptsächlich Arthropoden (v.a. Insekten) zu nennen, die vielfach als Artengemeinschaft den Abbau in Gemeinschaft (Symbiose) bewerkstelligen. Erhebliche wirtschaftliche Schäden entstehen so durch diese Destruenten oder deren Zusammenspiel, die als höhere Organismen je nach Ernährungstypus z.B. als phloeophag, xylophag, myzetophag oder in Kombination als xylomyzetophag bezeichnet werden können.

Die wichtigsten dieser Schadorganismen sind Termiten (Isoptera), Ameisen (Formicidae) und Käfer (Coleoptera) neben weiteren Gruppen mit ähnlichem Fraßverhalten. Innerhalb der Käfer treten v.a. Cerambycidae, Scolytinae, Curculionidae, Anobiidae oder Lyctidae als Holzschädlinge in Erscheinung.

Eine weitere im Folgenden beispielhaft angeführte Gruppe sind die Werftkäfer (Lymexylidae) mit weltweit etwa 50 vorkommenden Arten. Ihre Larven, die im Holzkörper von in der Regel abgestorbenen oder gefällten Bäumen leben, sind mit spezifischen und unspezifischen Pilzarten, Hefen und Bakterien vergesellschaftet, und ernähren sich von deren Stoffwechselprodukten oder aber fakultativ vom holzigem Material selbst.

Von den weltweit nur wenigen Arten der Lymexylidae sind mehrere als wirtschaftlich bedeutende Holz- / Lagerholzschädlinge in Erscheinung getreten, zu nennen sind hier *Melittomma sericeum* in Nordamerika an Kastanie, *Protomelittomma insulare* auf den Seychellen an Kokospalmen, *Atractocerus brevicomis* in Zentralafrika u.a. an Teak, *A. kresulerae* in Australien an Eukalyptus und *A. reversus* in Indien an Weihrauch (*Boswellia* spec.). Von den in Europa nachgewiesenen 4 Arten werden zwei als Holzschädlinge eingestuft.

Für die Erfindung von Interesse sind vor allem xylophage oder xylomyzetophage Arthropoden, deren Lebenszyklus eine Vergesellschaftung mit Mikroorganismen wie Pilzen / Hefen oder Bakterien einschließt. Insbesondere betrifft dies die Familien Scolytinae und Lymexylidae, und hier besonders sogenannte Ambrosia-Arten, insbesondere Arten der Gattung *Elateroides* (in der Literatur wird *Holecoetus* synonym verwendet), hier vor allem die Arten *Elateroides dermestoides*, *Elnteroides flabellicornis, Elateroides formosanus*, *Elateroides orientalis* und *Elateroides lugubris* innerhalb der Familie der Lymexylidae.

*Elateroides dermestoides* tritt überall im Vorkommensgebiet als bedeutender Lagerholzschädling an fast allen dort jeweils heimischen Baumarten (fünfundsiebzig Prozent der Waldfläche Deutschlands ist mit Baumarten bestockt, die Brutmaterial darstellen können) auf. Abhandlungen über die Schäden und die Bekämpfung des Käfers finden sich in sämtlichen Standard- und Lehrwerken der Forstentomologie und immer noch sind heutige Behandlungsempfehlungen ("schnellstmögliche Abfuhr des (Nadel-) Holzes außerhalb des Waldes (oder in Laubwaldgebiete) während der Flugzeit und bei einsetzendem Befall") kaum fortschrittlicher als das Wissen der Begründer des Waldschutzes im frühen neunzehnten Jahrhundert ("man begegnet denselben sicher durch Reinlichkeit im Forste, nämlich dadurch, dass man die Windfälle bald wegräumt und die alten Stöcke rodet").

Eine Kurzvorstellung der Biologie und eine umfangreiche aktuelle Übersicht über Befallsbedingungen, Befallsablauf und den Abwehr des Befalls, gibt eine Untersuchung aus dem Jahr 2005 mit dem Titel "Untersuchungen zu den Befallsbedingungen, zum Befallsablauf und der Abwehr des Befalls von Laub- und Nadelholz durch den Sägehörnigen Werftkäfer (*Elateroides dermestoides* Latr. [Coleoptera, Lymexylidae]). Die Forstliche Versuchs- und Forschungsanstalt Baden-Württemberg berichtet dort über aktuelle Schadereignisse, gibt eine Übersicht über die Schäden in der Vergangenheit und stellt Versuche an, die Eignungen verschiedener neuer Möglichkeiten der Befallsprävention (Nasslagerung, mineralische Schutzhülle, Folienverpackung, Pflanzenschutzmittel) zu ermitteln. Hervorgegangen aus dieser Untersuchung ist die Zulassung eines Insektizids als Pflanzenschutzmittel zum Schutz von Holzlagern vor *Elateroides dermestoides* und die Zulassung für die Behandlung von Verpackungsmaterial, das für den Export bestimmt ist.

Die Schäden, die Lymexylidae verursachen sind vor allem die technische Entwertung des befallenen Holzes. Hochwertige Hölzer (Furnier, Möbelbau, Parkett, Fassholz) müssen frei von Bohrlöchern und Pilzen (Bläuepilze) sein, die häufig von Insekten verursacht und eingetragen werden. Ein Befall der Käfer schließt solche Verwendungen aus und führt zu erheblichen Abschlägen in den Verkaufserlösen.

Eine artspezifische Quantifizierung des Befalls wird im allgemeinen Einschlags- und Handelsgeschehen nicht vorgenommen. Durch die zunehmend extensivierte Bewirtschaftung der Wälder und den höheren Mechanisierungsgrad steigen am Boden liegende Holzvorräte in Form von Stöcken, Hiebsresten und Kronenmaterial. Dieses Material ist je nach Holzart, entsprechende Dimensionen vorausgesetzt, mindestens im ersten Jahr für *Elateroides dermestoides* zum Teil bis in das dritte Jahr nach Fällung attraktiv. Es ist davon auszugehen, dass auf diese Weise die zunehmende zeitliche Entzerrung und einzelstammweise Nutzung der Zielstärke in Kombination mit den sich im Zuge einer möglichen Klimaerwärmung zu generell höheren Temperaturen entwickelnden Witterungsverläufen und damit verbundenen Sturmereignissen die Populationen von *Elateroides dermestoides* anwachsen lassen.

Ein weiterer, verstärkender Faktor dürfte das zunehmende Vorhandensein von zur Förderung der Biodiversität in den Waldbeständen belassenem Totholz sein, sowie aktuell zunehmend Schäden auch an lebenden Bäumen auftreten, was unter anderem für *Fagus sylvatica* als "Buchenkomplexkrankheit" bezeichnet wird. Gründe hierfür werden in erhöhten Stickstoffeinträgen oder möglicherweise veränderten Klimabedingungen gesehen. Die zukünftige Entwicklung dieses Phänomens ist offen und kann eine weitere Zunahme der Schäden bedeuten.

Die rechtzeitige Abfuhr des Holzes aus dem Wald oder dessen schnelle Austrocknung werden seit Jahren als bislang einziger Lösungsweg gefordert, den Befall des Holzes zu vermeiden.

Aufgrund der verborgenen Lebensweise der Larve im Holzkörper sind Bekämpfungsversuche mit Insektiziden und Pflanzenschutzmitteln bislang oft vergeblich geblieben. Erfolgreiches Abtöten der Larven ist nur mit chemischen Substanzen zu erzielen, deren humantoxische Wirkung oder toxische Wirkungen auf Nicht-Ziel-Organismen den Einsatz verbietet (siehe Patente und Patentanmeldungen DD 143721A5; DD 141831A5; DE 69717927T2; DE 69410042T2; DE 68902372T2; DE 3872634T2; DE 3485788T2; DE 2826893A1; DE 2029753A; DE 1966823C3; DE1966823B2; DE 1966823A; DE 1266479B; DE 1266479A).

Da ein Abtöten der Larven in bereits befallenen Hölzern also ausscheidet, verbleibt einzig die Möglichkeit den Neubefall, also die Eiablage, zu verhindern. Als präventive Maßnahme ist die Behandlung von gefährdetem Holz mit Pflanzenschutzmitteln prinzipiell möglich. Die Nordwestdeutsche-Forstliche Versuchsanstalt (Waldschutz-Info Nr.8, 2007) führt hierzu aus: "Ab Mitte Juli können vor allem an liegender Eiche und Buche, jedoch auch an anderen Holzarten wie Fichte und Douglasie, unter Umständen sehr große Bohrmehlhäufchen beobachtet werden. Dabei dürfte es sich meist um den Sägehörnigen Werftkäfer (*Holecoetus dermestoides*) handeln, der diese Hölzer bereits Mitte April besiedelt hat. Ein Befall durch Werftkäfer führt in der Regel zu vollständiger Entwertung. Vorbeugend hätte vor Beginn der Flugzeit (Mitte April) gehandelt werden müssen, eine (erfolgreiche!) kurative Behandlung ist zum jetzigen Zeitpunkt nicht mehr möglich."

Pflanzenschutzmittel, deren Eindringtiefe in den Holzkörper gering ist, wirken nur effektiv wenn sie aufgebracht wurden, bevor die Larven sich ins Holz einbohren. Eine sog. "vorbeugende Polterschutzspritzung" ist jedoch nach sog. "guter forstlicher Praxis" und somit aus rechtlichen Gründen (Pflanzenschutzgesetz § 2a) nur in Ausnahmefällen angezeigt. Zurzeit ist ausschließlich ein Wirkstoff zum Einsatz gegen *Elateroides dermestoides* zugelassen (lambda-Cyhalothrin), dessen Verwendung jedoch Einschränkungen unterliegt.

In Forstbetrieben, die einer Zertifizierung für naturnahen Waldbau (z.B. FSC oder PEFC) unterliegen, ist dessen Einsatz bisweilen gänzlich untersagt. Entsprechend der o.g. Zulassung von Pflanzenschutzmitteln gegen *Elateroides dermestoides*, ist "vorbeugend nur ein Objektschutz von Wertholz bei festgestellter Gefährdung" erlaubt, der jedoch ungeahnt der lokal reellen Flugzeit und der mangelnden Kenntnis über lokale Populationsdichten häufig nicht zielgerichtet stattfinden kann und deshalb uneffektiv ist. Die Feststellung der Gefährdung erfolgt nach wenig sicheren Kriterien.

Die Zulassung des Einsatzes von Pflanzenschutzmitteln bedingt also Auflagen, deren (räumlich, zeitliche, Ziel-Art-spezifische) Einhaltung ein Lockstoff unter Umständen erst ermöglicht oder wesentlich präzisiert.

Eine effektive Bekämpfung mit Insektiziden ist demzufolge nur während der sehr kurzen Flugzeit möglich. Diese ist für *Elateroides dermestoides* mit wenigen Tagen bis Wochen im Vergleich zu anderen Arten aussergewöhnlich kurz (Erwin Graf, Pius Manser, "Beitrag zum eingeschleppten Schwarzen Nutzholzborkenkäfer Xilosandrus germanus. Biologie und Schadenpotential an im Wald gelagertem Rundholz im Vergleich zu Xyloterus lineatus und Holecoetus dermestoides", Schweiz. Z. Forstwes. 151 (2000) 8: 271-281) und von lokal variierenden Wetter- und Klimaverhältnissen abhängig.

Um die lokale Flugzeit zu ermitteln, bedarf es eines Monitoring-Systems, das bislang mangels geeigneter Lockstoffe nicht vorhanden war.

In der forstlichen Praxis kommt *Elateroides* häufig syntopisch (gleichzeitig am gleichen Ort) mit weiteren Holzschädlingen aus der Familie der Scolytinae (Borkenkäfer) vor. Hier v.a. *Xyloterus lineatus, X domesticus*, *X. signatus* und weitere, deren Schadbild nur mit entsprechender Sachkenntnis sicher unterschieden werden kann. Dies ist ein wesentlicher Grund für nur unsichere Kenntnisse über das tatsächliche Ausmaß und Verbreitung der Schäden in der europäischen Forstwirtschaft, die durch *Elateroides* spec. verursacht werden. Oftmals werden Schäden der o.g. Arten mangels Unterscheidung zu Schäden durch "Holzbrüter" zusammengefasst. Dies stellt sowohl für den zulassungsgerechten Einsatz der Pflanzenschutzmittel, als auch für eine artspezifische Bewertung der Schäden ein bedeutendes Problem dar, das durch einen effizienten art-selektiven Lockstoff gelöst werden kann.

In allen Perioden des historischen Waldschutzes wurden Versuche mit den jeweils verfügbaren Pflanzenschutzmitteln und Insektiziden gegen *Elateroides dermestoides* unternommen. Auch im europäischen Ausland und Osteuropa wurden solche Versuche, z.B. mit Pyrethroiden, Chlorkohlenwasserstoffen und Organophosphaten, durchgeführt.

Neben der Möglichkeit, bereits befallenes Holz mit Insektiziden zu behandeln um den Befall zu stoppen, besteht die Möglichkeit den Befall mit einer sog. kurativen Behandlung vor dem Einbohren der Larven zu schützen. Probleme hier sind vor allem der zeitlich synchrone Einsatz zum Flugverlauf von *Elateroides dermestoides,* der lokal in Ermangelung eines effektiven Fangsystems oft nicht genau bekannt ist. In der Vergangenheit wurden außerdem die Möglichkeiten der Anwendung von Nasslagerung, mineralischen Schutzhüllen, und Folienverpackungen als Schutz vor Insektenbefall überprüft. Obwohl im Einsatz gegen andere Holzinsekten erfolgreich, konnte keines der drei untersuchten Verfahren sicheren Schutz vor *Elateroides dermestoides*-Befall gewährleisten. Selbst beim Einsatz von Pflanzenschutzmitteln wurden einzelne Einbohrungen beobachtet. Die Versuche können als erfolglos betrachtet werden.

Die Kenntnis über Lockstoffe ist bezgl. *Elateroides dermestoides* gering (Brattli et al., J. Appl. Ent. 122, 345-352 (1998)). Ein Stoff, von dem bislang eine anlockende Wirkung auf viele xylophage Insektenarten nachgewiesen wurde, und dessen Lockwirkung auch auf *Elateroides dermestoides* seit den 1980er Jahren bekannt ist, ist Ethanol. Die Anlockwirkung ist jedoch, wie sich in zahlreichen Untersuchungen herausgestellt hat, gering verglichen mit der Wirkung auf andere Insektenarten. Es lassen sich damit kaum Befallsprognosen oder generelle Aussagen zum Vorkommen von *Elateroides dermestoides* treffen.

In der Literatur werden immer wieder generelle Forstschutzmaßnahmen zur Vermeidung eines Befalls angeführt: "Entrindung des Stammanlaufs vor der Fällung", "Sofortige Entrindung der Stämme", "kürzeste Dauer der Lagerung im Wald", "Abfuhr der Hölzer bis spätestens vor Flugbeginn der Insekten", "Just-in-time-Fällung", "Lagerung des Holzes außerhalb des Waldes", "jahreszeitlich späte Fälltermine", "Lagerung an trockenen, besonnten und windexponierten Standorten", "Rodung und Entfernung oder Verbrennung der Wurzelstöcke".

Die forstliche Praxis zeigt jedoch bereits seit Jahrzehnten, dass betriebliche Restriktionen diese Maßnahmen oft verhindern: derzeitige Änderungen auf dem Holzmarkt, d.h. wirtschaftlicher Druck und hohe Kosten verlangen zunehmend rationalisierte Holzerntemaßnahmen. Hinzu kommen verlängerte Lagerzeiten im Wald durch drastische Vergrößerung der holzverarbeitenden Betriebe und damit verbundene längere Anfahrwege und im Verhältnis geringere Lagerkapazitäten im Betrieb mit der Konsequenz der Lagerung im befallsexponierten Waldlager. Durch die extensivierte Bewirtschaftung kommt es zur Anreicherung von Lager-, Rest- und Totholz an der Waldstraße und in den Flächen, die idealen Brut- und Lebensraum für holzbesiedelnde Insekten darstellen. Vergrößerungen der Forstbetriebe mit zurückgehenden Personaldichten wirken den Forstschutzmaßnahmen zusätzlich deutlich entgegen.

Wünschenswert wären folglich weitere, selektive Verfahren zum Anlocken von o.g. Arthropoden, Insekten und insbesondere Werftkäfern in Fallen. Ausgewählte Publikationen sind:
US 4,992,270 beschreibt ein Verfahren zum Anlocken von Käfern in einer Insektenfalle. Die Falle enthält ein Polymer mit den Lockstoffen Benzylformiat und/oder D-Pulegon.
WO 2008/012756 A2 betrifft eine Lockstoffzusammensetzung und ein Verfahren zur Bekämpfung des Apfelwicklers. Als Lockstoffen können Terpene eingesetzt werden. Als Beispiel für ein geeignetes Monoterpen wird Carveol genannt.
WO 2013/063509 A1 betrifft ein Verfahren zum Vertreiben von Insekten, insbesondere Stinkwanzen, wobei zwei verschiedene ätherische Öle eingesetzt werden.

Die Dissertation Odour signals relevant to beetles in deadwood habitats von G. Holighaus, Universität Göttingen, 2012 (https://ediss.uni-goettingen.de/handle/11858/00-1735-0000-000D-F05D-C) offenbart, dass der Werftkäfer *Elateroides dermestoides* auf Botenstoffe (Kairomone) reagiert, die von den von ihm befallenen Bäumen bzw. gefällten Baumstämmen abgegeben werden. Allerdings kommen derartige Kairomone nicht notwendigerweise von den Bäumen selbst, sondern werden von Pilzen produziert, die auf Totholz leben, wie zum Beispiel *Ascoidea hylecoeti.* Dieser Pilz setzt Rosenoxid frei. Bei einer Untersuchung der Fühlerreaktionen konnte gezeigt werden, dass *E. dermestoides* sehr deutlich auf dieses Signal reagiert und dass die Reaktion eine hohe Konzentrationsabhängigkeit aufweist. Es wurde die Schlussfolgerung gezogen, dass die Wirtserkennung von *E. dermestoides* in großem Maße unabhängig von den baumartspezifischen Kairomonen ist, sondern von pilzlicher Aktivität auf toten oder sterbenden Bäumen bewirkt wird.

Die vorliegende Erfindung hat sich die Aufgabe gestellt, die Nachteile im Stand der Technik zumindest teilweise zu beheben. Insbesondere hat sie sich die Aufgabe gestellt, ein verbessertes Verfahren, eine Lockstoffzusammensetzung und deren Verwendung für die Überwachung und Bekämpfung von Schadinsekten im Forstbetrieb bereitzustellen.

Erfindungsgemäß gelöst wird die Aufgabe durch ein Verfahren gemäß Anspruch 1, eine Verwendung gemäß Anspruch 7 und eine Lockstoffzusammensetzung gemäß Anspruch 12.

Ein erfindungsgemäßes Verfahren zum Anlocken von Insekten aus der Familie der Werftkäfer (*Lymexylidae*) umfasst die Schritte:
- zumindest teilweises Freisetzen zumindest eines Teils einer Lockstoffzusammensetzung aus einem Behälter, wodurch die Insekten zum Ort der Freisetzung angelockt werden;
- Fangen der angelockten Insekten;
wobei die Lockstoffzusammensetzung Rosenoxid umfasst.

Das Freisetzen der Lockstoffzusammensetzung kann unter anderem mittels eines Dispensers geschehen, welcher an einer Insektenfalle angebracht ist. Es ist beispielsweise auch möglich, dass die Lockstoffzusammensetzung an einem Fangholzhaufen, begiftet oder unbegiftet, freigesetzt wird.

Das Fangen der Insekten kann zum Beispiel in einer Lebendfalle, in einer Klebstoff-Falle oder in einer Giftfalle erfolgen.

Überraschenderweise wurde gefunden, dass die Verbindungen der obigen allgemeinen Formel eine Lockwirkung aufweisen. Zielinsekten können kambiophage, xylophage und/oder myzetophage Arthropoden wie insbesondere Lymexylidae sein.

Auf diese Weise lassen sich beispielsweise die folgenden Pflanzen schützen: Fagaceae, Rosaceae, Juglandaceae, Betulaceae, Sapindaceae, Oleaceae, Pinaceae, Magnoliaceae, Ulmaceae (*Ulmus*), Moraceae *(Mora, Ficus),* Arecaceae (*Stevensonia*, *Nephrosperma, Deckenia, Roscheria),* Myrtaceae *(Eucalyptus)*, Burseraceae *(Boswellia),* Anacardiaceae *(Lannea, Mangifera*, *Anacardium*, *Buchanania, Semecarpus*), Fabaceae *(Prioria, Albizia, Baikiaea, Mildbraediodendron)* Meliaceae (*Khaya*, *Ekebergia, Swietenia),* Malvaceae (*Bombax*, *Triplochiton),* Combretaceae *(Limba, Terminalia),* Lamiaceae *(Tectona),* Euphorbiaceae *(Ricinodendron, Hevea*), *Dipterocarpaceae (Dipterocarpus, Dryobalanops)*, Apocynaceae (*Funtumia*),

Speziellere Zielinsekten sind vor allem aber der Lymexyloidea einschliesslich Hylecoetinae, Melittommatinae, Lymexylinae, Melittomminae, einschliesslich der Gattungen *Elateroides* (syn. *Holecoetus); Lymexylon; Atractocerus; Australymexylon; Melittomma; Melittommopsis; Protomelittomma; Neohylecoetus; Raractocetus; Hymaloxylon; Arractocetus; Fusicornis; Urtica; Ponomarenkylon* und *Holecoetopsis.*

Insbesondere kann es sich um die folgenden Käfer handeln: *Elateroides dermestoides*, *Elateroides flabellicornis, Elateroides lugubris* und *Lymexylon navale.*

Eine effektive Bekämpfung mit Insektiziden ist nur während der sehr kurzen Flugzeit der Insekten möglich. Diese ist mit wenigen Tagen bis Wochen im Vergleich zu anderen Arten extrem kurz, in eigenen Untersuchungen wurden 85% der Gesamtfangmenge von *E. dermestoides* innerhalb von 3 Fangtagen erreicht, während dieser Schwellenwert bei syntopen Arten (Scolytinae) trotz Verwendung artspezifischer Aggregationspheromone hingegen erst nach eineinhalb bis drei Monaten erreicht wurde (Erwin Graf, Pius Manser, "Beitrag zum eingeschleppten Schwarzen Nutzholzborkenkäfer Xylosandrus germanus. Biologie und Schadenpotential an im Wald gelagertem Rundholz im Vergleich zu Xoloterus lineatus und Hylecoetus dermestoides", Schweiz. Z. Forstwes. 151 (2000) 8: 271-281)).

Desweiteren ist die Flugzeit und damit die Effektivität eines Fallensystems stark von lokal variierenden Wetter- und Kleinklimaverhältnissen abhängig. Um die lokale Flugzeit zu ermitteln, bedarf es eines Monitoring-Systems, das bislang mangels geeigneter Lockstoffe nicht vorhanden war. Die erfindungsgemäße Lösung macht es erst möglich Käfer effektiv zu aggregieren und Insektizide gezielt und damit räumlich beschränkt (z.B. entfernt von Sonderschutzbiotopen lt. §29 Bundesnaturschutzgesetz) einzusetzen.

Die nachfolgende Tabelle fasst die bisherige Praxis und ihre Probleme sowie die Vorteile durch die erfindungsgemäße Lösung insbesondere in Hinblick auf Werftkäfer zusammen:

| *Bisherige Praxis* / *Probleme* | *Vorteile durch Erfindung* |
|---|---|
| Populationsdichten (= Gefährdungspotential) generell unbekannt | effektive Monitoringfallen mit Lockstoff möglich |
| räumliche Verteilung der Käfer unbekannt | Lokalisierung ungefährdeter Lagerholzstandorte mit geringer Populationsdichte durch Monitoringfallen, Überwachung der Holzlager möglich |
| Wirksamkeit der PSM / Insektizide zeitlich begrenzt, keine Wiederholungsbehandlung zugelassen | optimale und effektive (kurze Flugzeit des Käfers) Terminierung des PSM-Einsatzes durch Monitoringfallen |
| Abwehr mit PSM nur kurativ ohne push-pull-Möglichkeiten | pull-Kompartiment durch lokalen Massenfang mit Fallen - Effizienter PSM-Einsatz möglich |
| keine Fanghölzer nutzbar (geringe Lockwirkung) | effektive Fanghölzer mit PSM & Lockstoffkombination |
| Schäden schwer unterscheidbar von Nutzholzborkenkäfern *Xoloterus* spec. | jetzt für beide Arten Art-spezifische Lockstoffe verfügbar (Kombinationspräparate sind möglich) |
| Zertifizierte Forstbetriebe (FSC / PEFC) unterliegen Einschränkungen der PSM Verwendung | push-pull-Verfahren mit Lock-/Ablenkstoffen ist ein biologisches V. & verbessert räumliche Begrenzung von PSM Einsatz - von Zertifizierern bevorzugt oder ausschließlich erlaubt. |
| Befallsvermeidung nur durch jahreszeitlich frühzeitige Abfuhr & Verarbeitung | Verlängerung der Lagerzeiten durch Fallenschutz möglich |

Zur Ausführung des erfindungsgemäßen Verfahrens kommen vorteilhafterweise zur Abgabe der Stoffe und Stoffgemische Verdampfungsbehälter auf Lösungsmittelbasis (ggf. Kapillarsysteme) oder handelsübliche Dispenser zur Anwendung (z.B. Beutel-Systeme, Flaschen-Membranverdampfung, Polymereinbettung, Kapillarsysteme beispielsweise der Firmen Pheronova AG Glattbrugg, Schweiz; Wilhelm Biologischer Pflanzenschutz Sachsenheim "Langlock Dispenser"; Neudorff GmbH KG, Emmerthal).

Das erfindungsgemäße Verfahren kann zum Beispiel als Bestandteil von Push/Pull-Strategien, des Monitorings und des Massenfangs eingesetzt werden.

Push/Pull-Strategien bedienen sich der Manipulation des Verhaltens von Schadinsekten und deren natürlichen Feinden durch die Einbeziehung und Verflechtung von Stimuli, die auf der einen Seite das zu schützende Material (Baum, Lagerholz, Rohholz, Schnittholz) unattraktiv oder unbrauchbar machen oder erscheinen lassen (push), gleichzeitig auf der anderen Seite die Schadinsekten zu einer attraktiven Quelle locken (pull), von wo die Tiere kontinuierlich entfernt werden (z.B. Falle). Die "push" oder "pull" - Komponenten sind im Allgemeinen nicht toxisch. Insbesondere wirken push-pull-Strategien durch die Maximierung der Effizienz der verhaltens steuernden Stimulanzien durch additive oder synergistische Verwendung derselben.

Stimulanzien, die als "push"-Komponenten Verwendung finden, können mit handelsüblichen händischen, motormanuellen oder maschinenbteriebenen Spritzgeräten, wie sie in jedem forstlichen oder landwirtschaftlichen Betrieb Verwendung finden aus- oder aufgebracht werden. So kann je nach Anwendung oder Gefährdung ein einzelner Stamm oder ganze Holzpolter oder Holzlager behandelt werden.

Neben einem generellen Auftrag zur Umweltbeobachtung (§15 BnatSchG) ist für die Prinzipien eines integrierten Waldschutzes innerhalb der geregelten Waldwirtschaft, und entsprechend der Vorgaben der Naturschutz- und Pflanzenschutzgesetze auch für extensiv oder nicht bewirtschaftete Wälder, die zeitliche und räumliche Kenntnis über das Auftreten eines Schadinsektes von primärer Bedeutung. Die hier vorgeschlagenen Lockstoffe dienen der Erfüllung dieser grundlegenden Aufgabe. Die hieraus gewonnene Kenntnis dient zur Entwicklung, Verbesserung, vor allem aber der gezielten Anwendung von Handlungsstrategien im Umgang mit Schadinsekten. Bestehende Strategien werden erheblich in ihrer Effizienz gesteigert, oder gar erst ermöglicht.

Unabhängig von den o.g. Anwendungen kann das erfindungsgemäße Verfahren zur Effektivitätssteigerung eines Insektizids oder entsprechenden, auch biologischen Bekämpfungsverfahrens genutzt werden. Durch die Beeinflussung einer vorhersagbaren Verteilung eines Schadinsekts, wird die Effizienz aller populationsreduzierenden Methoden erhöht. Hierzu können alle bereits bekannten Fangmethoden, wie sie zum Beispiel zur Borkenkäferbekämpfung, oder zur Bekämpfung von Ameisen und Termiten Verwendung finden, genutzt werden. Für die fliegenden Stadien der Zielorganismen dienen vor allem Flugfallen, in der Nahorientierung derselben, oder der flugunfähigen Tiere und Stadien können angepasste und bereits bekannte Fangsysteme für laufende Organismen verwendet werden.

Weitere Aspekte und Ausführungsformen der vorliegenden Erfindung werden nachfolgend beschrieben. Sie können beliebig miteinander kombiniert werden, sofern sich aus dem Kontext nicht eindeutig das Gegenteil ergibt.

Hinsichtlich des Rosenoxids sind sämtliche Stereoisomere geeignet: (2R,4S), (2S,4R), (2R,4R) und (2S,4S).

In einer weiteren Ausführungsform des erfindungsgemäßen Verfahrens umfasst die Lockstoffzusammensetzung weiterhin Verbindungen, die ausgewählt sind aus der Gruppe umfassend lineare Alkanole, verzweigte Alkanole, Alkenole, Alkandiole, Aldehyde, Carbonsäureester (insbesondere Acetate und Propionate; besonders bevorzugt Ethylacetat, Ethylpropionat und Propylacetat), Alkoxyphenole, Ketone, Monoterpene und/oder Sesquiterpene.

Diese Verbindungen können die Wirksamkeit von Rosenoxid modulieren.

Dann kann eine Kombination von Substanzen aus Wirtspflanzen der Lymexylidae, sowie von Substanzen aus ektosymbiotischen Mikroorganismen vorliegen, wobei hier unter "symbiotisch" antibiotisch, parabiotisch und eusymbiotisch verstanden werden soll.

Systematisch können die Mikroorganismen beispielsweise aus den Gruppen der *Termitomyces*, *Xylaria, Praetermitomyces, Eutermitomyces*, Sordariomycetes (z.B. Ophiostomatales, Ceratocystidaceae), Sacharomycetales insbesondere der Pilzgattung *Ascoidea* und *Alloascoidea* stammen. Des Weiteren können sie den Bakterien und Hefen angehören, insebesondere den Gattungen *Pichia, Arthroascus*, *Saccharomycopsis*, *Kluyveromyces*, *Hansenula, Ogataea, Candida, Torulopsis, Saccharomyces*, *Alternaria, Aspergillus, Bionectria, Fusarium*, *Geomyces*, *Penicillium*, *Cryptococcus, Tremella*, *Sporobolomyces*, oder *Chryseobacterium, Pseudomonas*, *Rahnella,* oder *Serratia.*

Beispiele für die oben genannten erfindungsgemäß geeigneten zusätzlichen Verbindungen in der Lockstoffzusammensetzung sind:
Primäre Alkohole, vorzugsweise mit drei bis sechs Kohlenstoffatomen oder Methanol, insbesondere Propanol, Butanol, 2-Butenol, Pentanol, 2-Pentenol, 2,4-Pentadienol, 3-Pentenol, Hexanol, 2-Hexenol, 3-Hexenol, 2,4-Hexadienol;
Aliphatische Aldehyde, vorzugsweise mit einem bis zwölf Kohlenstoffatomen, insbesondere Propanal, Butanal, Pentanal, 2-Pentenal, Hexanal, 2-Hexenal, Heptanal, 2-Heptenal, 3-Heptenal, Octanal, 2-Octenal, 3-Octenal, 2,4-Octadienal, Nonanal, 2-Nonenal, 2,4,-Nonadienal, Decanal, 2-Decenal, 2,4-Decadienal, 2,5-Decadienal, Undecanal, 2-Undecenal;
Carbonsäureester, ausgewählt aus einem Monocarbonsäureester als Verbindung aus primären Alkoholen mit vorzugsweise einem bis acht Kohlenstoffatomen in Verbindung mit aliphatischen, gesättigten Carbonsäuren mit vorzugsweise einem bis vier Kohlenstoffatomen. Insbesondere bevorzugt sind Ethylacetat, Ethylpropionat, Propylacetat, Essigsäure-1-methylpropylester, Essigsäure-2-methylpropylester, n-Buttersäureethylester, n-Butylacetat; 3-Methylbutylacetat, n-Hexylacetat, n-Octylacetat, Bernsteinsäuremonoethylester oder Lactone, vorzugsweise γ-Butyrolacton oder γ-Undecalacton;
Bicyclische Epoxy-Monoterpene, vorzugsweise ein Limonenoxid, ein Citronellol- oder Nerolderivat wie 2,6,6-Trimethyl-2-vinyl-tetrahydropyran, Terpinolen, cis-Linalooloxid, trans-Linalooloxid, Citronellal, Linalool, Myrcenol, cis-Ocimenol, trans-Ocimenol, α-Terpineol, β-Citronellylacetat, β-Citronellol, Nerol, Hydroxylinalool, 1,8-Terpinmonoacetat, Hydroxycitronellol, insbesondere pyranoide Terpenoxide; Eukalyptol;
Ketone, vorzugsweise Aceton, 2-Butanon, 2-Hexanon, 5-Methyl-hexanon. 5-Methyl-hex-3-en-2-on, 2-Methyl-hex-2-en-5-on, 2-Heptanon, 3-Heptanon;
Carbonsäuren wie Propionsäure, Isobuttersäure, Buttersäure, 2-Furancarbonsäure, Bernsteinsäure;
Methoxybenzol-Derivate, vorzugsweise 2-Methoxyphenol, 3-Methoxyphenol, 4-Methoxyphenol, 1,2,3 Trimethoxybenzol, 1,2,4 Trimethoxybenzol, 1,3,5 Trimethoxybenzol;
Octanderivate, vorzugsweise ausgewählt aus 1-Octanol, 3-Octanol, 1-Octen-3-ol, (S)-(+)-1-Octen-3-ol, (R)-(-)-1-Octen-3-ol, (E)-2-Octen-1-ol, (Z)-2-Octen-1-ol, 2-Octen-4-ol, 7-Octen-4-ol, (Z)-1,5-Octadien-3-ol, 2-(E)-3,7-Dimethyl-2,6-octadien-1-ol, 2-(Z)-3,7-Dimethyl-2,6-octadien-1-ol, 3,7-Dimethyl-1,6-octadien-3-ol, 3,7 Dimethyl-6-octen-1-ol, Octene, (E)-1,3-Octadien, (Z)-1,3-Octadiene, Octanal, (E)-2-Octenal, Octan-3-on, 5-methyl-3-Heptanon, 1-Octen-3-on, 3-Octen-2-on, 2,3-Octandion, Octansäure, 6-Octen-4-olid, 2-Octanone, 3-Octanone, 4-Octanone, 3-Octenylacteat, Octylacetat.

Spiroacetale, wie Alkyl-1,6-dioxaspiro[4.5]decane, vorzugsweise Conophthorin in den Enantiomeren (5S,7R), (5R,7S) oder (5R,7R), (5S,7S), vorzugsweise trans-Conophthorin, bevorzugt (5S,7S)-(-)-7-methyl-1,6-dioxaspiro[4.5]decane
Vorzugsweise umfasst die Lockstoffzusammensetzung im erfindungsgemäßen Verfahren die folgenden Komponenten, wobei Ethanol ebenfalls vorliegen kann:
Hexanal + Nonanal + Decanal + Rosenoxid;
Hexanal + Nonanal + Decanal + Ethylacetat + Propylacetat + Rosenoxid; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : Ethylacetat : Propylacetat: Ethanol in einem Volumenverhältnis von (5-15) : (0.1-5) : (0.1-5) : (15-35) : (15-35) : (15-35): (15-35) : (100-2000) : (100-2000) : (0-100.000.000)
Hexanal + Nonanal + Decanal + Rosenoxid + 1,8-Cineol; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : 1,3,3-Trimethyl-2-oxabicyclo[2.2.2]octan : Ethanol in einem Volumenverhältnis von (5-15) : (0.1-5) : (0.1-5) : (15-35) : (15-35) : (15-35) : (15-35) : (100-2000) : (0-100.000.000)
Hexanal + Nonanal + Decanal + Rosenoxid + Limonen + 1,8-Cineol; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : Ethanol in einem Volumenverhältnis von (5-15) : (0.1-5) : (0.1-5) : (15-35) : (15-35) : (15-35): (15-35) : (10-200) : (100-2000) : (0-100.000.000)
Hexanal + Nonanal + Decanal + Rosenoxid + Limonen + 1,8-Cineol + 2-Methoxyphenol; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : 2-Methoxyphenol : Ethanol in einem Volumenverhältnis von (5-15) : (0.1-5) : (0.1-5) : (15-35) : (15-35) : (15-35): (15-35) : (10-200) : (100-2000) : (5000-15000) : (0-100.000.000)
Hexanal + Nonanal + Decanal + Rosenoxid + Limonen + 1,8-Cineol + 2-Methoxyphenol + Ethylacetat + Propylacetat; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : 2-Methoxyphenol : Ethylacetat : Propylacetat : Ethanol in einem Volumenverhältnis von (5-15) : (0.1-5) : (0.1-5) : (15-35) : (15-35) : (15-35): (15-35) : (10-200) : (100-2000) : (5000-15000) : (100-2000) : (100-2000) : (0-100.000.000)
Hexanal + Nonanal + Decanal + Rosenoxid + Limonen + 1,8-Cineol + 1,2-Dimethoxybenzen; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : 1,2-Dimethoxybenzen : Ethanol in einem Volumenverhältnis von (5-15) : (0.1-5) : (0.1-5) : (15-35) : (15-35) : (15-35): (15-35) : (10-200) : (100-2000) : (5000-15000) : (0-100.000.000)
   (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : Ethanol in einem Volumenverhältnis von (0.1-5) : (0.1-5) : (0.1-5) : (0.1-5) : (0-10.000.000)
   (2R,4S)-2-(2-Methyl-1-propenyl)-4-methyltetrahydropyran : (2S,4S)-2-(2-Methyl-1-propenyl)-4-methyltetrahydropyran : Ethanol in einem Volumenverhältnis von (0.1-5) : (0.1-5) : (0-10.000.000)
   (2S,4R)-2-(2-Methyl-1-propenyl)-4-methyltetrahydropyran : (2R,4R)-2-(2-Methyl-1-propenyl)-4-methyltetrahydropyran : Ethanol in einem Volumenverhältnis von (0.1-5) : (0.1-5) : (0-10.000.000)

In einer weiteren Ausführungsform des erfindungsgemäßen Verfahrens umfasst die Lockstoffzusammensetzung weiterhin Formulierungshilfsmittel, die ausgewählt sind aus der Gruppe umfassend Tenside, Füllstoffe, Kriechmittel, Verdickungsmittel und/oder Stabilisatoren.

Die Lockstoffzusammensetzungen können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), wasserlösliche Pulver (SP), wasserlösliche Konzentrate, emulgierbare Konzentrate (EC), Emulsionen (EW), wie Ölin-Wasser und Wasser-in-ÖI-Emulsionen, versprühbare Lösungen, Suspensionskonzentrate (SC), Dispersionen auf Öl- oder Wasserbasis, ölmischbare Lösungen, Kapselsuspensionen (CS), Stäubemittel (DP), Granulate (GR) in Form von Mikro-, Sprüh-, Aufzugsund Adsorptionsgranulaten, wasserdispergierbare Granulate (WG), wasserlösliche Granulate (SG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie", Band 7, C. Hanser Verlag München, 4. Aufl. 1986, Wade van Valkenburg, "Pesticide Formulations", Marcel Dekker, N.Y., 1973, K. Martens, "Spray Drying" Handbook, 3rd Ed. 1979, G. Goodwin Ltd. London.

Die Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry", 2nd Ed., J. Wiley & Sons, N.Y., C. Marsden, "Solvente Guide", 2nd Ed., Interscience, N.Y. 1963, McCutcheon's "Detergents and Emulsifiers Annual", MC Publ. Corp., Ridgewood N.J., Sisley and Wood, "Encyclopedia of Surface Active Agents", Chem. Publ. Co. Inc., N.Y. 1964, Schönfeldt, "Grenzflächenaktive Äthylenoxidaddukte", Wiss. Verlagsgesell., Stuttgart 1976, Winnacker-Küchler, "Chemische Technologie", Band 7, C. Hanser Verlag München, 4. Aufl. 1986.

Spritzpulver sind in Wasser gleichmäßig dispergierbare Präparate, die neben dem Lockstoffgemisch außer einem Verdünnungs- oder Inertstoff noch Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate,

ligninsulfonsaures Natrium, 2,2'-dinaphthylmethan-6,6'-disulfonsaures Natrium, dibutylnaphthalinsulfonsaures Natrium oder auch oleoylmethyltaurinsaures Natrium enthalten. Zur Herstellung der Spritzpulver werden die Lockstoffe beispielsweise in üblichen Apparaturen wie Hammermühlen, Gebläsemühlen und Luftstrahlmühlen feingemahlen und gleichzeitig oder anschließend mit den Formulierungshilfsmitteln vermischt.

Emulgierbare Konzentrate werden durch Auflösen des Lockstoffs in einem organischen Lösungsmittel z.B. Butanol, Cyclohexanon, Dimethylformamid, Xylol, Diethylether, Methyl-tert-butylether oder auch höhersiedenden Aromaten oder Kohlenwasserstoffen oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z.B. Sorbitanfettsäureester oder Polyoxethylensorbitanester wie z.B. Polyoxyethylensorbitanfettsäureester. Stäubemittel erhält man durch Vermahlen des Wirkstoffes mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Nass-Vermahlung mittels handelsüblicher Perlmühlen und gegebenenfalls Zusatz von Tensiden, wie sie z.B. oben bei den anderen Formulierungstypen bereits aufgeführt sind, hergestellt werden. Emulsionen, z.B. ÖI-in-Wasser-Emulsionen (EW), lassen sich beispielsweise mittels Rührern, Kolloidmühlen und/oder statischen Mischern unter Verwendung von wässrigen organischen Lösungsmitteln und gegebenenfalls Tensiden, wie sie z.B. oben bei den anderen Formulierungstypen bereits aufgeführt sind, herstellen.

Granulate können entweder durch Verdüsen des Lockstoffs auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial.

Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischern und Extrusion ohne festes Inertmaterial hergestellt.

Zur Herstellung von Teller-, Fliessbett-, Extruder- und Sprühgranulate siehe z.B. Verfahren in "Spray-Drying Handbook" 3rd ed. 1979, G. Goodwin Ltd., London, J.E. Browning, "Agglomeration", Chemical and Engineering 1967, Seiten 147 ff, "Perry's Chemical Engineer's Handbook", 5th Ed., McGraw-Hill, New York 1973, S. 8-57.

Es können bekannte Stabilisatoren wie Emulgatoren, Antioxidationsmittel, Phosphate und Säure-Regulatoren Verwendung finden die dem Abfang reaktiven Sauerstoffs (z.B. Vitamin E, Tocopherole, BHT (Butylhydroxytoluol), der Pufferung des pH-Wertes (z.B. Ascorbinsäure, Zitronensäure, Natriumzitrat, Tri- oder Polyphosphate) oder der Lichtstabilität insb. dem UV-Schutz (gehinderte Amin-Lichtstabilisatoren (HALS), Hydroxybenzophenone, Cinnamatester und Oxanilide) dienen.

Für weitere Einzelheiten zur Formulierung von Pflanzenschutzmitteln, wie sie analog im Rahmen der vorliegenden Erfindung angewendet werden können, siehe z.B. G.C. Klingman, "Weed Control as a Science", John Wiley and Sons, Inc., New York, 1961 , Seiten 81-96 und J.D. Freyer, S.A. Evans, "Weed Control Handbook", 5th Ed., Blackwell Scientific Publications, Oxford, 1968, Seiten 101-103.

Im erfindungsgemäßen Verfahrens sind die Insekten, die durch die Lockstoffzusammensetzung angelockt werden, aus der Familie der Werftkäfer (*Lymexylidae*) ausgewählt. Insbesondere kann es sich hierbei um den Sägehörnigen Werftkäfer, *Elateroides dermestoides*, handeln.

In einer weiteren Ausführungsform des erfindungsgemäßen Verfahrens erfolgt das Fangen der angelockten Insekten mittels einer Fangeinrichtung, die ausgewählt ist aus der Gruppe der Fanghölzer und Fangholzhaufen, Prallfallen, Leimfallen und/oder Trichterfallen.

Ein weiterer Aspekt der vorliegenden Erfindung ist die Verwendung einer Lockstoffzusammensetzung zum Anlocken von Insekten aus der Familie der Werftkäfer (*Lymexylidae*), dadurch gekennzeichnet, dass die Lockstoffzusammensetzung Rosenoxid umfasst.

Hinsichtlich des Rosenoxids sind sämtliche Stereoisomere geeignet: (2R,4S), (2S,4R), (2R,4R) und (2S,4S).

In einer weiteren Ausführungsform der erfindungsgemäßen Verwendung umfasst die Lockstoffzusammensetzung weiterhin Verbindungen, die ausgewählt sind aus der Gruppe umfassend lineare Alkanole, verzweigte Alkanole, Alkenole, Alkandiole, Aldehyde, Carbonsäureester (insbesondere Acetate und Propionate; besonders bevorzugt Ethylacetat, Ethylpropionat und Propylacetat), Alkoxyphenole, Ketone, Monoterpene und/oder Sesquiterpene. Zur Vermeidung unnötiger Wiederholungen wird auf die entsprechenden Ausführungen zum Verfahren Bezug genommen. Bevorzugt ist die Verwendung einer Lockstoffzusammensetzung, welche die folgenden Komponenten umfasst, wobei Ethanol ebenfalls vorliegen kann:
Hexanal + Nonanal + Decanal + Rosenoxid;
Hexanal + Nonanal + Decanal + Ethylacetat + Propylacetat + Rosenoxid; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : Ethylacetat : Propylacetat: Ethanol in einem Volumenverhältnis von (5-15) : (0.1-5) : (0.1-5) : (15-35) : (15-35) : (15-35): (15-35) : (100-2000) : (100-2000) : (0-100.000.000)
Hexanal + Nonanal + Decanal + Rosenoxid + 1,8-Cineol; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : 1,3,3-Trimethyl-2-oxabicyclo[2.2.2]octan : Ethanol in einem Volumenverhältnis von (5-15) : (0.1-5) : (0.1-5) : (15-35) : (15-35) : (15-35): (15-35) : (100-2000) : (0-100.000.000)
Hexanal + Nonanal + Decanal + Rosenoxid + Limonen + 1,8-Cineol; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : Ethanol in einem Volumenverhältnis von (5-15) : (0.1-5) : (0.1-5) : (15-35) : (15-35) : (15-35): (15-35) : (10-200) : (100-2000) : (0-100.000.000)
Hexanal + Nonanal + Decanal + Rosenoxid + Limonen + 1,8-Cineol + 2-Methoxyphenol; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : 2-Methoxyphenol : Ethanol in einem Volumenverhältnis von (5-15) : (0.1-5) : (0.1-5) : (15-35) : (15-35) : (15-35): (15-35) : (10-200) : (100-2000) : (5000-15000) : (0-100.000.000)
Hexanal + Nonanal + Decanal + Rosenoxid + Limonen + 1,8-Cineol + 2-Methoxyphenol + Ethylacetat + Propylacetat; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : 2-Methoxyphenol : Ethylacetat : Propylacetat : Ethanol in einem Volumenverhältnis von (5-15) : (0.1-5) : (0.1-5) : (15-35) : (15-35) : (15-35): (15-35) : (10-200) : (100-2000) : (5000-15000) : (100-2000) : (100-2000) : (0-100.000.000)
Hexanal + Nonanal + Decanal + Rosenoxid + Limonen + 1,8-Cineol + 1,2-Dimethoxybenzen; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : 1,2-Dimethoxybenzen : Ethanol in einem Volumenverhältnis von (5-15) : (0.1-5) : (0.1-5) : (15-35) : (15-35) : (15-35): (15-35) : (10-200) : (100-2000) : (5000-15000) : (0-100.000.000)
   (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : Ethanol in einem Volumenverhältnis von (0.1-5) : (0.1-5) : (0.1-5) : (0.1-5) : (0-10.000.000)
   (2R,4S)-2-(2-Methyl-1-propenyl)-4-methyltetrahydropyran : (2S,4S)-2-(2-Methyl-1-propenyl)-4-methyltetrahydropyran : Ethanol in einem Volumenverhältnis von (0.1-5) : (0.1-5) : (0-10.000.000)
   (2S,4R)-2-(2-Methyl-1-propenyl)-4-methyltetrahydropyran : (2R,4R)-2-(2-Methyl-1-propenyl)-4-methyltetrahydropyran : Ethanol in einem Volumenverhältnis von (0.1-5) : (0.1-5) : (0-10.000.000)

In einer weiteren Ausführungsform der erfindungsgemäßen Verwendung umfasst die Lockstoffzusammensetzung weiterhin Formulierungshilfsmittel, die ausgewählt sind aus der Gruppe umfassend Tenside, Füllstoffe, Kriechmittel, Verdickungsmittel und/oder Stabilisatoren. Zur Vermeidung von Wiederholungen wird auf die vorangegangenen Ausführungen Bezug genommen.

In der erfindungsgemäßen Verwendung sind die Insekten, die durch die Lockstoffzusammensetzung angelockt werden, aus der Familie der Werftkäfer (*Lymexylidae*) ausgewählt. Insbesondere kann es sich hierbei um den Sägehörnigen Werftkäfer, *Elateroides dermestoides*, handeln.

Die vorliegende Erfindung betrifft weiterhin eine Lockstoffzusammensetzung zum Anlocken von Insekten aus der Familie der Werftkäfer (*Lymexylidae*), dadurch gekennzeichnet, dass die Lockstoffzusammensetzung Rosenoxid, Hexanal, Nonanal und Decanal umfasst.

Auch hier wird zur Vermeidung unnötiger Wiederholungen Bezug auf die vorangegangenen Ausführungen genommen.

Hinsichtlich des Rosenoxids sind sämtliche Stereoisomere geeignet: (2R,4S), (2S,4R), (2R,4R) und (2S,4S).

Weiter bevorzugte Lockstoffzusammensetzungen umfassen:
Hexanal + Nonanal + Decanal + Ethylacetat + Propylacetat + Rosenoxid; insbesondere:
   Hexanal : Nonanal: Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : Ethylacetat : Propylacetat: Ethanol in einem Volumenverhältnis von (5-15) : (0.1-5) : (0.1-5) : (15-35) : (15-35) : (15-35): (15-35) : (100-2000) : (100-2000) : (0-100.000.000)
Hexanal + Nonanal + Decanal + Rosenoxid + 1,8-Cineol; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : 1,3,3-Trimethyl-2-oxabicyclo[2.2.2]octan : Ethanol in einem Volumenverhältnis von (5-15) : (0.1-5) : (0.1-5) : (15-35) : (15-35) : (15-35) : (15-35) : (100-2000): (0-100.000.000)
Hexanal + Nonanal + Decanal + Rosenoxid + Limonen + 1,8-Cineol; insbesondere:
   Hexanal : Nonanal: Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : Ethanol in einem Volumenverhältnis von (5-15) : (0.1-5) : (0.1-5) : (15-35) : (15-35) : (15-35): (15-35) : (10-200) : (100-2000) : (0-100.000.000)
Hexanal + Nonanal + Decanal + Rosenoxid + Limonen + 1,8-Cineol + 2-Methoxyphenol; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : 2-Methoxyphenol : Ethanol in einem Volumenverhältnis von (5-15) : (0.1-5) : (0.1-5) : (15-35) : (15-35) : (15-35): (15-35) : (10-200) : (100-2000) : (5000-15000) : (0-100.000.000)
Hexanal + Nonanal + Decanal + Rosenoxid + Limonen + 1,8-Cineol + 2-Methoxyphenol + Ethylacetat + Propylacetat; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : 2-Methoxyphenol : Ethylacetat : Propylacetat : Ethanol in einem Volumenverhältnis von (5-15) : (0.1-5) : (0.1-5) : (15-35) : (15-35) : (15-35): (15-35) : (10-200) : (100-2000) : (5000-15000) : (100-2000) : (100-2000) : (0-100.000.000)
Hexanal + Nonanal + Decanal + Rosenoxid + Limonen + 1,8-Cineol + 1,2-Dimethoxybenzen; insbesondere:
   Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : 1,2-Dimethoxybenzen : Ethanol in einem Volumenverhältnis von (5-15) : (0.1-5) : (0.1-5) : (15-35) : (15-35) : (15-35): (15-35) : (10-200) : (100-2000) : (5000-15000) : (0-100.000.000)
   (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : Ethanol in einem Volumenverhältnis von (0.1-5) : (0.1-5) : (0.1-5) : (0.1-5) : (0-10.000.000)
   (2R,4S)-2-(2-Methyl-1-propenyl)-4-methyltetrahydropyran : (2S,4S)-2-(2-Methyl-1-propenyl)-4-methyltetrahydropyran : Ethanol in einem Volumenverhältnis von (0.1-5) : (0.1-5) : (0-10.000.000)
   (2S,4R)-2-(2-Methyl-1-propenyl)-4-methyltetrahydropyran : (2R,4R)-2-(2-Methyl-1-propenyl)-4-methyltetrahydropyran : Ethanol in einem Volumenverhältnis von (0.1-5) : (0.1-5) : (0-10.000.000)

In einer Ausführungsform der erfindungsgemäßen Lockstoffzusammensetzung umfasst diese weiterhin ein Insektizid.

Schließlich betrifft die vorliegende Erfindung auch ein Insektenfallen-System, umfassend eine erfindungsgemäße Lockstoffzusammensetzung. Geeignete Fallentypen sind beispielsweise Prallfallen, Leimfallen und/oder Trichterfallen. Unter einem Insektenfallen-System ist hierbei mindestens die mit der Lockstoffzusammensetzung versehene Falle zu verstehen. Dieses kann zum Beispiel durch direktes Auftragen oder aber durch einen separaten Lockstoffbehälter/Dispenser/etc., welcher an oder nahe der Falle angebracht ist, erfolgen.

Die vorliegende Erfindung wird anhand der nachfolgenden Anwendungsvorschläge weiter erläutert, ohne jedoch darauf beschränkt zu sein.

Duftköder-Prallfalle: In einer Variante hat die Falle eine Oberfläche, bevorzugt eine Prallfläche, die braun, schwarz oder grün ist. In einer weiteren Variante hat die Falle eine Oberfläche, bevorzugt eine Prallfläche, die durchsichtig ist. In einer weiteren Variante befindet sich der oder die Lockstoffbehälter oder Dispenser an der Oberfläche befestigt, vorzugsweise im unteren Drittel der Fallenlänge. In einer weiteren Variante ist die Falle derart konstruiert, dass der Luftraum über dem oder den Lockstoffbehälter(n) oder Dispenser(n) dem Fangbehälter zugeführt wird, oder sich der Lockstoff im Fangbehälter befindet. In einer weiteren Variante befindet sich die Falle in einer Position von 0,5 bis 2,0 Meter über der Oberfläche an dem Ort an dem die Falle aufgestellt ist. Die Art und Weise wie die Falle aufzustellen ist, ist dem Fachmann bekannt.

### Anwendungsvorschlag 1: Monitoring zur Flugzeit-Überwachung

Zur Überwachung und Ermittlung der lokalen Flugaktivitäten (Monitoring) können einzelne oder mehrere Fallen in Blöcken bis zu fünf aufgestellt werden. Einzelne Fallen oder Blöcke sollten einen Mindestabstand von 100 Metern nicht unterschreiten. Fallen innerhalb der Blöcke sollten einen Mindestabstand von 20 Metern nicht unterschreiten. Die Fallen werden an Holzpfählen oder Metallgalgen 0,5 bis 2,0 Meter über Grund freidrehend aufgehängt oder mit der Prallfläche ins Lee der vorherrschenden Windrichtung weisend befestigt. Die Fallen sollten im Bestandesinneren aufgestellt werden und einen Abstand von 50 Metern zum Waldrand nicht überschreiten. Der Abstand zu befallsgeeignetem, unbehandeltem Holz sollte mindestens 100 Meter betragen. Das Aufstellen der Fallen und Ausbringen der Lockstoffe sollte im Frühjahr vor dem ersten Auftreten von Tagestemperaturmaxima von 20 °C, spätestens vor der ersten Aprilwoche (je nach Höhenlage) beendet sein. Die Überwachungsintervalle sollten zwischen dem 15. April und dem 15. Juni (200 m üNN, für Mittelgebirgs- und Gebirgsregionen entsprechend verlängern) nicht größer als eine Woche sein. Für eine kurative Behandlung gefährdeter Hölzer mit Pflanzenschutzmitteln sollte eine Behandlung maximal zwei Wochen nach dem Auftauchen der ersten einzelnen Individuen erfolgen und je nach Standzeit des Wirkstoffes spätestens innerhalb von vier Wochen abgeschlossen sein.

### Anwendungsvorschlag 2: Monitoring zur Identifikation von sicheren Holzlagerplätzen

Zur räumlichen Überwachung und Ermittlung sicherer Holzlagerplätze mit geringer Befallsgefährdung können einzelne oder mehrere Fallen in Blöcken aufgestellt werden. Geplante Holzlagerplätze sollten mit mindestens drei Fallen, deren Abstand mindestens 10 Meter beträgt, ein Jahr vor der Holzlagerung bestückt sein. Im Abstand von 30 bis 50 Metern und 100 Metern sollten in Kreuzstellung in allen Himmelsrichtungen je 4 Fallen unabhängig von Bestandestyp und Baumart - bei Waldrandlagern auch im Freiland - angebracht werden. Die Fallen werden an Holzpfählen oder Metallgalgen 0,5 bis 2,0 Meter über Grund freidrehend aufgehängt oder mit der Prallfläche ins Lee der vorherrschenden Windrichtung weisend befestigt. Der Abstand zu befallsgeeignetem, unbehandeltem Holz sollte mindestens 100 Meter betragen. Im Umkreis von mindestens 100 Metern um den ausgewählten Lagerplatz und die Fallen, sollte geeignetes Brutmaterial entfernt werden. Das Aufstellen der Fallen und Ausbringen der Lockstoffe sollte im Frühjahr vor dem ersten Auftreten von Tagestemperaturmaxima von 20 °C, spätestens vor der ersten Aprilwoche beendet sein. Die Überwachungsintervalle sollten zwischen dem 15. April und dem 15. Juni (in Höhenlagen entsprechend länger) nicht größer als eine Woche sein. Die Fangaktivität kann mit Ende Juni (Höhenlage s.o.) eingestellt werden.

### Anwendungsvorschlag 3: Push/Pull zum Schutz von Holzlagern, Integration mit Populationsreduzierenden Methoden

Zur Etablierung eines Push/Pull-Systems zur Bekämpfung phloeophager, xylophager oder xylomyzetophager Arthropoden werden die erfindungsgemäßen attraktiven Stoffe und Stoffgemische verwendet. Diese stellen Allomone, Kairomone oder Synomone dar. Sie können sowohl mittels Fallensystemen, aber auch zur Erhöhung der Attraktivität sog. Fangbäume auf diesen direkt aufgebracht werden. Weiterhin können Pheromone mit erfindungsgemäßen Stoffen oder Stoffgemischen kombiniert werden. Die erfindungsgemäßen Stoffe und Stoffgemische können durch sog. Nonhost-Volatile (NHV) ergänzt werden, diese sind dem Fachmann wohlbekannt. Sie können ebenso mit Dispensern, wie sie in den vorgestellten Fallen verwendet sind, abgegeben werden. Weitere nutzbare Dispensersysteme wie Glaskapillaren, oder Permeationssysteme auf Polymerbasis sind dem Fachmann wohlbekannt. Die räumliche Anordnung kann wie folgt erfolgen:

Push-Komponenten werden im günstigsten Fall direkt auf zu schützendes Material aufgebracht. Bei der Verwendung von Dispensern werden in unmittelbarer Nähe zu dem zu schützenden Material mehr als 5 Dispenser in einem Abstand von höchstens 10 Metern installiert. Pull-Komponenten sollten im Abstand von 50-150 Metern zu dem zu schützenden Material bevorzugt in Blöcken von mindestens drei Fallen mit einem Abstand von mindestens 20 Metern installiert werden und können um dieses herum kreisförmig angeordnet sein. Sie sind vor allem im Lee der Hauptwindrichtung zu installieren. Es sollten mindestens drei Blöcke installiert werden. Brutfähiges Material ist im Abstand von 50 Metern um das zu schützende Material zu entfernen. Mehrere zu schützende Holzlager sollten bei einem Abstand von unter 300 Metern durch Repellent-Dispenser verbunden werden, ist der Abstand größer sollte je ein eigenes Push-Pull-Arrangement installiert werden.

Die vorliegende Erfindung wird ebenfalls anhand der nachfolgenden Beispiele und Figuren weiter erläutert, ohne jedoch darauf beschränkt zu sein. Der besseren Übersicht halber werden die folgenden, in den Beispielen verwendeten IUPAC-Namen bestimmter Substanzen mit ihren Trivialbezeichnungen aufgeführt:

| | |
|---|---|
| (2R,4S)-2-(2-Methyl-1-propenyl)-4-methyltetrahydropyran: | *cis*-Rosenoxid |
| (2S,4S)-2-(2-Methyl-1-propenyl)-4-methyltetrahydropyran: | *trans*-Rosenoxid |
| (2S,4R)-2-(2-Methyl-1-propenyl)-4-methyltetrahydropyran: | *cis*-Rosenoxid (Enantiomer) |
| (2R,4R)-2-(2-Methyl-1-propenyl)-4-methyltetrahydropyran: | *trans*-Rosenoxid (Enantiomer) |
| (R)-1-Methyl-4-(1-methylethenyl)-cyclohexene: | (*R*)-(+)-Limonen |
| 1,3,3-Trimethyl-2-oxabicyclo[2.2.2]octan: | 1,8-Cineol |

### Beispiele

### Verhaltensversuche mit Lockstofffallen im Wald:

Die unten ausgeführten Verhaltensversuche wurden in den Zeiträumen 02.05.-30.06.2004, 06.05.-20.06.2005, 09.05.-22.06.2006 und 24.04.-31.05.2007 in einem Buchenaltbestand nördlich von Göttingen (Deutschland) durchgeführt.

Es wurden Kreuzfensterfallen aus dunkelbraun beschichteten Multiplex-Sperrholzplatten (5 mm) verwendet, wie sie zuvor zum Fang von Borkenkäfern verwendet wurden, mit einer Länge von 60 cm und einem Durchmesser von 25 cm, die in einem Trichter von 25 cm Durchmesser enden und mit einem schwarzen Kunststoffdeckel (30 cm Durchmesser) gegen Regen geschützt waren. Am unteren Ende der Trichteröffnung (2,3cm) befand sich eine Polyethylen-Fangflasche von 500 ml Fassungsvermögen mit Metallgazeboden für Trockenfang. 20 cm oberhalb des Trichterrandes auf einem Drittel der Länge der Prallfläche wurde eine Polyethylen-Lockstoffflasche (100 ml) angebracht, deren runde Öffnung 2,4 cm betrug. Eine ähnliche Falle als handelsüblicher Prallfalle ist z.B. als "WitaPrall" von der Fa. Witasek erhältlich. Für die Experimente wurden je sieben Fallen in fünf Blöcken in einem Buchenaltbestand aufgestellt. Die Fallen hatten einen Mindestabstand von 30 m, die Blöcke von 150 m. Die Fallen waren an Metallgalgen in einer Höhe von 1,6 m (Fallenoberkante) freistehend aufgehängt.

Die Lockstoffformulierung wurde, gelöst in Ethanol, in einer Menge von 10 ml in die Lockstoffflasche gefüllt, und alle zwei Tage erneuert. Insekten wurden lebend gefangen und alle zwei Tage aus dem Fanggebiet entfernt. In Laborversuchen wurden die Abdampfraten von Neudorff-Dispensern mit den verwendeten Polyethylen-Lockstofflaschen verglichen. Jene können ebenso wie z.B. Langlock-Dispenser der Firma Wilhelm Biologischer Pflanzenschutz verwendet werden um die als wirksam ermittelten Abgaberaten zu erzielen. Ebenso können mit diesen ausreichende Abdampfraten über die gesamte Flugperiode von 2 Monaten mit ein bis zwei Füllungen bereitgestellt werden. Zur Auswertung der einzelnen Experimente wurden für das phänologische Monitoring Tagesfangsummen relativ zur Gesamtfangsumme aller (min.) 15 Fangtage kumulativ als Individuen-Zeit-Kurve dargestellt.

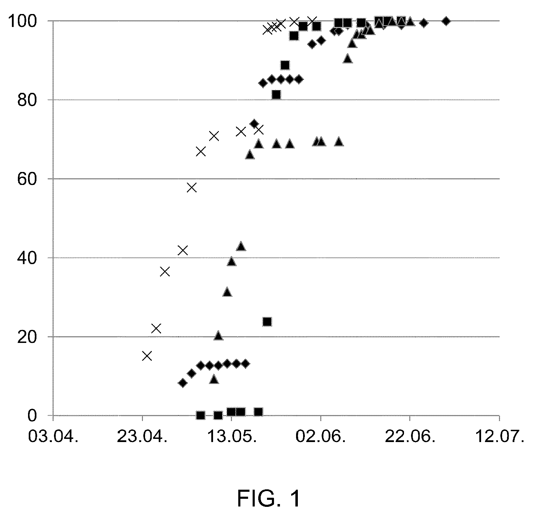

FIG. 1 zeigt kumulative, relative Individuen-Zeit-Kurven des *Elateroides dermestoides* dargestellt für vier Fangjahre, korrespondierend zu den vier nachfolgenden Beispielen (2004: Raute; 2005: Quadrat; 2006: Dreieck; 2007: Kreuz) - Ordinate: Prozent der Fangsumme; Abszisse: Monatsdekaden.

Für jedes Experiment wurde ein Fallensatz von 35 Fallen mindestens die Länge einer gesamten Fangperiode verwendet. Nach einem Experiment wurde die Lockstoffbelegung erneut randomisiert. Zur Auswertung wurden die Fangsummen aus je fünf Fallen pro Lockstoffformulierung über die gesamte Flugzeit gebildet und dargestellt.

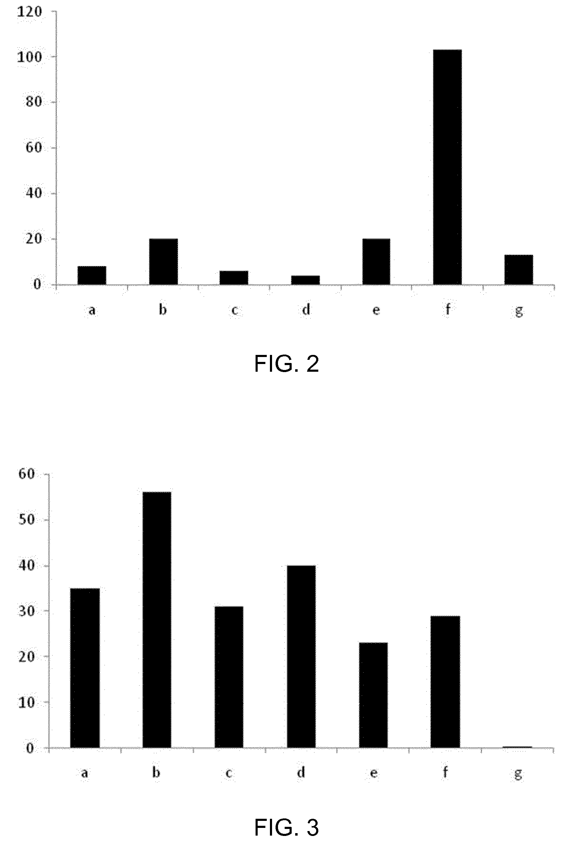

### Experiment 1 (vergl. FIG. 2)

Die Reaktion von Werftkäfer-Weibchen während des Schwärmens zur Eiablage auf folgende Duftstoffe/Duftstoffgemische wurde verglichen (je 5 Wiederholungen). Angegebene Mengenverhältnisse sind Volumenverhältnisse. Einträge a-e sind Vergleichsbeispiele; Eintrag f ist erfindungsgemäß.
a) 3-Methyl-1-butanol : 2-Methyl-1-butanol : (Z)-3-Hexen-1-ol : Ethanol (1 : 1 : 10 : 100.000)
b) 3-Methyl-1-butanol : 2-Methyl-1-butanol : (Z)-3-Hexen-1-ol : 1,3-Butandiol: 2,3-Butandiol : Hexanal: Nonanal: Decanal: Ethanol (10 : 10 : 100 : 100 : 100 : 10 : 1 : 1 : 1.000.000)
c) 3-Methyl-1-butanol : 2-Methyl-1-butanol : 1,3-Butandiol : 2,3-Butandiol : Hexanal : Nonanal : Decanal : 4-Methoxyphenol : 2-Methoxyphenol : Ethanol (1.000 : 1.000 : 1.000 : 1.000 : 100 : 10 : 10 : 1 : 100 : 1.000.000)
d) 3-Methyl-1-butanol : 2-Methyl-1-butanol : 1,3-Butandiol : 2,3-Butandiol : Hexanal : Nonanal : Decanal : 4-Methoxyphenol : 2-Methoxyphenol : Ethanol (1.000 : 1.000 : 1.000 : 1.000 : 10 : 1 : 1 : 10 : 1.000 : 1.000.000)
e) Hexanal : Nonanal : Decanal : 4-Methoxyphenol : 2-Methoxyphenol : 1-Octen-3-ol : 3-Octanon : Ethanol (10 : 1 : 1 : 1 : 100 : 1.000 : 1.000 : 10.000.000)
f) Hexanal : Nonanal : Decanal : (2R,4S)-2-(2-Methyl-l-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : Ethanol (10 : 1 : 1 : 25 : 25 : 25 : 25 : 100 : 1.000 : 10.000.000)
g) Ethanol (Kontrolle)

FIG. 2 zeigt Summe gefangener *Elateroides dermestoides* pro Fangperiode (Ordinate) für Stoffe oder Stoffgemische a-g (Abszisse).

### Experiment 2 (vergl. FIG. 3)

Die Reaktion von Werftkäfer-Weibchen während des Schwärmens zur Eiablage auf folgende Duftstoffe/Duftstoffgemische wurde verglichen (je 5 Wiederholungen). Angegebene Mengenverhältnisse sind Volumenverhältnisse. Einträge a-d und f sind erfindungsgemäß; Eintrag e ist ein Vergleichsbeispiel.
a) Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : Ethanol (10 : 1 : 1 : 25 : 25 : 25 : 25 : 100 : 1.000 : 10.000.000)
b) Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : 2-Methoxyphenol : Ethanol (10 : 1 : 1 : 25 : 25 : 25 : 25 : 100 : 1.000 : 10.000 : 10.000.000)
c) Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : (R)-1-Methyl-4-(1-methylethenyl)-cyclohexene : 1,3,3-Trimethyl-2-oxabicyclo[2.2.2]octan : 1,2-Dimethoxybenzen : Ethanol (10 : 1 : 1 : 25 : 25 : 25 : 25 : 100 : 1.000 : 1.000 : 10.000.000)
d) Hexanal : Nonanal : Decanal : (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : 1,3,3-Trimethyl-2-oxabicyclo[2.2.2]octan : Ethanol (10 : 1 : 1 : 25 : 25 : 25 : 25 : 10.000.000)
e) Hexanal : Nonanal : Decanal : 1,3,3-Trimethyl-2-oxabicyclo[2.2.2]octan : Ethanol (10 : 1 : 1 : 1.000 : 10.000.000)
f) (2R,4S)-2-(2-Methyl-1-propenyl)-4-methyltetrahydropyran : (2S,4S)-2-(2-Methyl-1-propenyl)-4-methyltetrahydropyran : (2S,4R)-2-(2-Methyl-1-propenyl)-4-methyltetrahydropyran : (2R,4R)-2-(2-Methyl-1-propenyl)-4-methyltetrahydropyran : Ethanol (1 : 1 : 1 : 1 : 10.000)
g) leerer Dispenser (Doppelnull-Kontrolle)

FIG. 3 zeigt die Summe gefangener *Elateroides dermestoides* pro Fangperiode (Ordinate) für Stoffe oder Stoffgemische a-f (Abszisse).

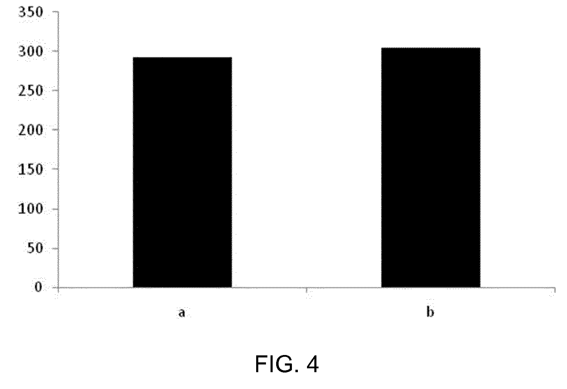

### Experiment 3 (vergl. FIG. 4)

Die Reaktion von Werftkäfer-Weibchen während des Schwärmens zur Eiablage auf folgende Duftstoffe/Duftstoffgemische wurde verglichen (je 17 Wiederholungen). Angegebene Mengenverhältnisse sind Volumenverhältnisse. Einträge a und b sind erfindungsgemäß.
a) (2R,4S)-2-(2-Methyl-1-propenyl)-4-methyltetrahydropyran : (2S,4S)-2-(2-Methyl-1-propenyl)-4-methyltetrahydropyran : Ethanol (1 : 1 : 10.000)
b) (2S,4R)-2-(2-Methyl-1-propenyl)-4-methyltetrahydropyran : (2R,4R)-2-(2-Methyl-1-propenyl)-4-methyltetrahydropyran : Ethanol (1 : 1 : 10.000)

FIG. 4 zeigt die Summe gefangener *Elateroides dermestoides* pro Fangperiode (Ordinate) für Stoffe oder Stoffgemische a-b (Abszisse).

## Patentansprüche

1. Verfahren zum Anlocken von Insekten aus der Familie der Werftkäfer (*Lymexylidae*), umfassend die Schritte:
- zumindest teilweises Freisetzen zumindest eines Teils einer Lockstoffzusammensetzung aus einem Behälter, wodurch die Insekten zum Ort der Freisetzung angelockt werden;
- Fangen der angelockten Insekten;
**dadurch gekennzeichnet, dass** die Lockstoffzusammensetzung Rosenoxid umfasst.

2. Verfahren gemäß Anspruch 1, wobei die Lockstoffzusammensetzung weiterhin Verbindungen umfasst, die ausgewählt sind aus der Gruppe umfassend lineare Alkanole, verzweigte Alkanole, Alkenole, Alkandiole, Aldehyde, Carbonsäureester, Alkoxyphenole, Ketone, Monoterpene und/oder Sesquiterpene.

3. Verfahren gemäß Anspruch 1, wobei die Lockstoffzusammensetzung weiterhin Hexanal, Nonanal und Decanal umfasst.

4. Verfahren gemäß Anspruch 1, wobei die Lockstoffzusammensetzung weiterhin Hexanal, Nonanal, Decanal und 1,8-Cineol umfasst.

5. Verfahren gemäß Anspruch 1, wobei die Lockstoffzusammensetzung weiterhin Hexanal, Nonanal, Decanal, 1,8-Cineol und Limonen umfasst und optional zusätzlich zu Hexanal, Nonanal, Decanal, 1,8-Cineol und Limonen weiterhin 2-Methoxyphenol oder 1,2-Dimethoxybenzen umfasst.

6. Verfahren gemäß einem oder mehreren der Ansprüche 1 bis 5, wobei das Fangen der angelockten Insekten mittels einer Fangeinrichtung erfolgt, die ausgewählt ist aus der Gruppe der Fanghölzer und Fangholzhaufen, Prallfallen, Leimfallen und/oder Trichterfallen.

7. Verwendung einer Lockstoffzusammensetzung zum Anlocken Insekten aus der Familie der Werftkäfer (*Lymexylidae*), **dadurch gekennzeichnet, dass** die Lockstoffzusammensetzung Rosenoxid umfasst.

8. Verwendung gemäß Anspruch 7, wobei die Lockstoffzusammensetzung weiterhin Verbindungen umfasst, die ausgewählt sind aus der Gruppe umfassend lineare Alkanole, verzweigte Alkanole, Alkenole, Alkandiole, Aldehyde, Carbonsäureester, Alkoxyphenole, Ketone, Monoterpene und/oder Sesquiterpene.

9. Verwendung gemäß Anspruch 7, wobei die Lockstoffzusammensetzung weiterhin Hexanal, Nonanal und Decanal umfasst.

10. Verwendung gemäß Anspruch 7, wobei die Lockstoffzusammensetzung weiterhin Hexanal, Nonanal, Decanal und 1,8-Cineol umfasst.

11. Verwendung gemäß Anspruch 7 wobei die Lockstoffzusammensetzung weiterhin Hexanal, Nonanal, Decanal, 1,8-Cineol und Limonen umfasst und optional zusätzlich zu Hexanal, Nonanal, Decanal, 1,8-Cineol und Limonen weiterhin 2-Methoxyphenol oder 1,2-Dimethoxybenzen umfasst.

12. Lockstoffzusammensetzung zum Anlocken von Insekten aus der Familie der Werftkäfer (*Lymexylidae*), **dadurch gekennzeichnet, dass** die Lockstoffzusammensetzung Rosenoxid, Hexanal, Nonanal und Decanal umfasst.

13. Lockstoffzusammensetzung gemäß Anspruch 12, weiterhin umfassend 1,8-Cineol.

14. Lockstoffzusammensetzung gemäß Anspruch 13 , weiterhin umfassend Limonen und optional zusätzlich zu Limonen 2-Methoxyphenol oder 1,2-Dimethoxybenzen.

15. Insektenfallen-System, umfassend eine Lockstoffzusammensetzung gemäß Anspruch 12, 13 oder 14.

## Claims

1. Method for attracting insects of the family of ship-timber beetles *(Lymexylidae*), comprising the steps of:
- at least partially releasing at least a part of an attractant composition from a container, whereby the insects are attracted toward the location of release;
- catching the attracted insects;
**characterized in that**
the attractant composition comprises rose oxide.

2. Method according to claim 1, wherein the attractant composition further comprises compounds selected from the group consisting of linear alkanols, branched alkanols, alkenols, alkane diols, aldehydes, carboxylic acid esters, alkoxyphenols, ketones, monoterpenes and/or sesquiterpenes.

3. Method according to claim 1, wherein the attractant composition further comprises hexanal, nonanal and decanal.

4. Method according to claim 1, wherein the attractant composition further comprises hexanal, nonanal, decanal and 1,8-cineol.

5. Method according to claim 1, wherein the attractant composition further comprises hexanal, nonanal, decanal, 1,8-cineol and limonene and optionally in addition to hexanal, nonanal, decanal, 1,8-cineol and limonene 2-methoxyphenol or 1,2-dimethoxy benzene.

6. Method according to one or more of claims 1 to 5, wherein the catching of the attracted insects is implemented by means of a catching device which is selected from the group consisting of trap logs and trap log piles, impact traps, glue traps and/or funnel traps.

7. Use of an attractant composition for attracting insects of the family of ship-timber beetles (*Lymexylidae*), **characterized in that** the attractant composition comprises rose oxide.

8. Use according to claim 7, wherein the attractant composition further comprises compounds selected from the group consisting of linear alkanols, branched alkanols, alkenols, alkane diols, aldehydes, carboxylic acid esters, alkoxyphenols, ketones, monoterpenes and/or sesquiterpenes.

9. Method according claim 7, wherein the attractant composition further comprises hexanal, nonanal and decanal.

10. Use according to claim 7, wherein the attractant composition further comprises hexanal, nonanal, decanal and 1,8-cineol.

11. Use according to claim 7, wherein the attractant composition further comprises hexanal, nonanal, decanal, 1,8-cineol and limonene and optionally in addition to hexanal, nonanal, decanal, 1,8-cineol and limonene 2-methoxyphenol or 1,2-dimethoxy benzene.

12. Attractant composition for attracting insects of the family of ship-timber beetles (*Lymexylidae*), **characterized in that** the attractant composition comprises rose oxide, hexanal, nonanal and decanal.

13. Attractant composition according to claim 12, further comprising 1,8-cineol.

14. Attractant composition according to claim 13, further comprising limonene and optionally in addition to limonene 2-methoxyphenol or 1,2-dimethoxy benzene.

15. Insect trap system comprising an attractant composition according to claim 12, 13 or 14.

## Revendications

1. Procédé destiné à attirer des insectes de la famille des lyméxylons (lymexylidae), comprenant les étapes :
- de libération au moins partielle d'une partie d'une composition d'appât à partir d'un récipient, ce par quoi les insectes sont attirés vers le lieu de la libération ;
- de capture des insectes attirés ;
**caractérisé en ce que** la composition d'appât comprend de l'oxyde de rose.

2. Procédé selon la revendication 1, où la composition d'appât comprend en outre des composés qui sont choisis dans le groupe comprenant des alcanols linéaires, des alcanols ramifiés, des alcénols, des diols d'alcanes, des aldéhydes, des esters d'acides carboniques, des alcoxyphénols, des cétones, des monoterpènes et/ou des sesquiterpènes.

3. Procédé selon la revendication 1, où la composition d'appât comprend en outre de l'hexanal, du nonanal et du décanal.

4. Procédé selon la revendication 1, où la composition d'appât comprend en outre de l'hexanal, du nonanal, du décanal et du 1,8-cinéol.

5. Procédé selon la revendication 1, où la composition d'appât comprend en outre de l'hexanal, du nonanal, du décanal, du 1,8-cinéol et du limonène et comprend en outre éventuellement de manière complémentaire à l'hexanal, au nonanal, au décanal, au 1,8-cinéol et au limonène, du 2-méthoxyphénol ou du 1,2-diméthoxybenzène.

6. Procédé selon une ou plusieurs des revendications 1 à 5, où la capture des insectes attirés est effectuée au moyen d'un dispositif de capture qui est choisi dans le groupe des bois servant d'appât, de tas de bois servant d'appât, de pièges par collision, de pièges de glu et/ou de pièges en entonnoirs.

7. Utilisation d'une composition d'appât pour attirer des insectes de la famille des lyméxylons (lymexylidae), **caractérisée en ce que** la composition d'appât comprend de l'oxyde de rose.

8. Utilisation selon la revendication 7, où la composition d'appât comprend en outre des composés qui sont choisis dans le groupe comprenant des alcanols linéaires, des alcanols ramifiés, des alcénols, des diols d'alcanes, des aldéhydes, des esters d'acides carboniques, des alcoxyphénols, des cétones, des monoterpènes et/ou des sesquiterpènes.

9. Utilisation selon la revendication 7, où la composition d'appât comprend en outre de l'hexanal, du nonanal et du décanal.

10. Utilisation selon la revendication 7, où la composition d'appât comprend en outre de l'hexanal, du nonanal, du décanal et du 1,8-cinéol.

11. Utilisation selon la revendication 7, où la composition d'appât comprend en outre de l'hexanal, du nonanal, du décanal, du 1,8-cinéol et du limonène et comprend en outre éventuellement de manière complémentaire à l'hexanal, au nonanal, au décanal, au 1,8-cinéol et au limonène, du 2-méthoxyphénol ou du 1,2-diméthoxybenzène.

12. Composition d'appât destinée à attirer des insectes de la famille des lyméxylons (lymexylidae), **caractérisée en ce que** la composition d'appât comprend de l'oxyde de rose, de l'hexanal, du nonanal et du décanal.

13. Composition d'appât selon la revendication 12, comprenant en outre du 1,8-cinéol.

14. Composition d'appât selon la revendication 13, comprenant en outre du limonène et éventuellement de manière complémentaire au limonène, du 2-méthoxyphénol ou du 1,2-diméthoxybenzène.

15. Système de pièges à insectes, comprenant une composition d'appât selon les revendications 12, 13 ou 14.
